(19) Europäisches Patentamt
European Patent Office
Office européen des brevets

(11) **EP 2 232 237 B1**

(12) **FASCICULE DE BREVET EUROPEEN**

(45) Date de publication et mention de la délivrance du brevet:
**18.07.2018 Bulletin 2018/29**

(21) Numéro de dépôt: **08872980.1**

(22) Date de dépôt: **18.12.2008**

(51) Int Cl.:
*G01N 21/35* (2014.01)     *G01N 21/23* (2006.01)
*G01J 4/00* (2006.01)      *G01N 21/17* (2006.01)
*G01N 21/3581* (2014.01)

(86) Numéro de dépôt international:
**PCT/FR2008/001783**

(87) Numéro de publication internationale:
**WO 2009/106728 (03.09.2009 Gazette 2009/36)**

(54) **PROCEDE ET DISPOSITIF DE MESURE MONOCOUP DE LA BIREFRINGENCE TRANSITOIRE INDUITE PAR UNE PERTURBATION APPARTENANT AU DOMAINE DES FREQUENCES TERAHERTZ**

VERFAHREN UND VORRICHTUNG FÜR EINE EINMALIGE MESSUNG DER VORÜBERGEHENDEN DOPPELBRECHUNG, DIE DURCH EINE STÖRUNG IM TERAHERTZ-FREQUENZBEREICH INDUZIERT WIRD

METHOD AND DEVICE FOR ONE-SHOT MEASUREMENT OF THE TRANSIENT BIREFRINGENCE INDUCED BY A PERTURBATION LYING WITHIN THE TERAHERTZ FREQUENCY RANGE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0760296**

(43) Date de publication de la demande:
**29.09.2010 Bulletin 2010/39**

(73) Titulaires:
• **Centre National de la Recherche Scientifique (C.N.R.S.)**
**75794 Paris Cedex 16 (FR)**
• **UNIVERSITE PARIS-SUD 11**
**91405 Orsay cedex (FR)**

(72) Inventeurs:
• **DE WAELE, Vincent**
**F-59650 Villeneuve d'Ascq (FR)**
• **SCHMIDHAMMER, Ulrich**
**F-75014 Paris (FR)**

(74) Mandataire: **Kador & Partner PartG mbB**
**Corneliusstraße 15**
**80469 München (DE)**

(56) Documents cités:
• **G. BERDEN ET AL: "TIME RESOLVED SINGLE-SHOT MEASUREMENTS OF TRANSITION RADIATION AT THE THZ BEAMLINE OF FLASH USING ELECTRO-OPTIC SPECTRAL DECODING" PROCEEDINGS OF EPAC 2006, [Online] 2006, pages 1058-1060, XP002490371 EDINBURGH, SCOTLAND Extrait de l'Internet: URL:http://www.rijnhuizen.nl/users/gielber den/pdfps/EPAC2006_TUPCH027.pdf> [extrait le 2008-07-30]**
• **YAN X ET AL: "Subpicosecond electro-optic measurement of relativistic electron pulses" PHYSICAL REVIEW LETTERS APS USA, [Online] vol. 85, no. 16, 16 octobre 2000 (2000-10-16), pages 3404-3407, XP002490736 ISSN: 0031-9007 Extrait de l'Internet: URL:http://prola.aps.org/pdf/PRL/v85/i16/p 3404_1> [extrait le 2008-07-31]**
• **J.- L. MARIGNIER ET AL: "Time-resolved spectroscopy at the picosecond laser-triggered electron accelerator ELYSE" RADIATION PHYSICS AND CHEMISTRY ELSEVIER UK, vol. 75, no. 9, septembre 2006 (2006-09), pages 1024-1033, XP002490591 ISSN: 0969-806X**

- KARTAZAEV V ET AL: "Polarization properties of SC generated in CaF2" OPTICS COMMUNICATIONS ELSEVIER SCIENCE B.V. NETHERLANDS, [Online] vol. 281, no. 3, 28 octobre 2007 (2007-10-28), pages 463-468, XP002490590 online ISSN: 0030-4018 Extrait de l'Internet: URL:http://www.sciencedirect.com/science?_ob=ArticleURL&_udi=B6TVF-4PXMWJV-2&_user=9 87766&_rdoc=1&_fmt=&_orig=search&_sort=d& v iew=c&_acct=C000049880&_version=1&_urlVer s ion=0&_userid=987766&md5=ee3ba0dda2bc606 ce f7734352318cdd5> [extrait le 2008-07-31]
- BERDEN G ET AL: "Benchmarking of electro-optic monitors for femtosecond electron bunches" PHYSICAL REVIEW LETTERS AMERICAN PHYSICAL SOCIETY USA, [Online] vol. 99, no. 16, 19 octobre 2007 (2007-10-19), pages 164801-1, XP002490369 ISSN: 0031-9007 Extrait de l'Internet: URL:http://www.rijnhuizen.nl/users/gielber den/pdfps/Berden_PRL_2007.pdf> [extrait le 2008-07-30]
- JINGLING SHEN ET AL: "Electron-beam bunch length monitor based on electro-optic detection technique" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 5646, no. 1, 28 janvier 2005 (2005-01-28), pages 269-274, XP002490592 ISSN: 0277-786X
- G. PHILLIPS ET AL: "Single Shot Longitudinal Bunch Profile Measurements by Temporally Resolved Electro-Optical Detection" PROCEEEDINGS OF THE 8TH EUROPEAN WORKSHOP ON BEAM DIAGNOSTICS AND INSTRUMENTATION (DIPAC 2007), VENICE, ITALY, [Online] 23 mai 2007 (2007-05-23), pages 1-3, XP002490374 online pre-press release Extrait de l'Internet: URL:http://felino.elettra.trieste.it/paper s/WEO2A02.pdf> [extrait le 2008-07-30]
- WILKE I ET AL: "Single-shot electron-beam bunch length measurements" PHYSICAL REVIEW LETTERS APS USA, [Online] vol. 88, no. 12, 25 mars 2002 (2002-03-25), pages 124801-1-124801-4, XP002490373 ISSN: 0031-9007 Extrait de l'Internet: URL:http://prola.aps.org/pdf/PRL/v88/i12/e 124801> [extrait le 2008-07-30]

**Description**

La présente invention concerne un procédé et un dispositif pour la mesure directe, non déformée et monocoup de la biréfringence transitoire induite dans un milieu optique par une perturbation appartenant au domaine des fréquences térahertz.

L'invention concerne le domaine technique de la caractérisation de la biréfringence induite dans un milieu optique et plus particulièrement le domaine du diagnostique électro-optique ou magnéto-optique. À ce titre, l'invention s'applique notamment à la spectroscopie térahertz, à la caractérisation de composants électroniques et au diagnostic de faisceaux de particules chargées et accélérées.

La méthode conventionnelle d'échantillonnage pour caractériser le profil temporel de radiations térahertz est basée sur l'effet Pockels. La méthode de caractérisation consiste ainsi à faire traverser un signal optique impulsionnel, appelé signal d'impulsion de sonde, dans un milieu optique, en un point soumis à un rayonnement térahertz. Ainsi, le champ électrique de l'impulsion de sonde subit un retard de phase, selon les deux axes de la biréfringence induite. Le profil temporel du rayonnement térahertz peut alors être reconstitué à partir de la connaissance de la variation temporelle du retard de phase obtenue, par exemple, par modulation de la polarisation du champ électromagnétique du signal d'impulsions de sonde en fonction du temps (L. Duvillaret, S. Rialland, J.-L. Coutaz, J. Opt. Soc. Am. B 19, 2692 (2000)).

L'échantillonnage électro-optique conventionnel est basé sur la répétition du signal à mesurer. Le profil temporel du rayonnement térahertz est reconstitué à partir d'acquisitions séquentielles obtenues en variant le retard temporel entre le rayonnement térahertz et une impulsion laser ultracourte de sonde. Les dispositifs d'échantillonnage électro-optiques basés sur cette technique peuvent atteindre des résolutions temporelles sub-picosecondes, et sont sensibles sur plusieurs ordres de magnitude, grâce à l'emploi de sources lasers à haute cadence de répétition (MHz) couplées à un amplificateur synchrone, ou « lock-in amplifier » (J. A. Valdmanis, G. Mourou, IEEE J. Quantum Electron. 22, 69 (1986)).

Néanmoins, pour de nombreuses applications, la technique décrite ci-dessus n'est pas applicable, en particulier dans le cas des applications liées à la caractérisation de systèmes instables (échantillons biologiques, systèmes physico-chimiques réactifs, imagerie d'objets en mouvement ou instables), ou dans le cas d'expériences avec des fluctuations coup à coup inhérentes. Ainsi, dans certaines configurations, le rayonnement térahertz ne peut être synchronisé précisément avec les impulsions de sonde. Dans d'autres cas, les fluctuations de ce rayonnement térahertz sont spécifiquement caractérisées par rapport à une horloge optique de référence.

Pour ces nombreux cas, non couverts par l'échantillonnage électro-optique conventionnel, des méthodes d'enregistrement monocoup du profil temporel de la radiation térahertz ont été développées.

Historiquement, la première méthode d'acquisition monocoup proposée consiste à encoder le profil temporel d'un rayonnement térahertz sur le spectre d'une impulsion laser de sonde étirée temporellement, par dérive de fréquence. L'impulsion térahertz est alors décodée en dispersant l'impulsion de sonde dans un spectrographe, grâce à la connaissance de la relation de dispersion temps-fréquence. On parle alors d'encodage/décodage spectral (Z. Jiang, X.-C. Zhang, Appl. Phys. Lett. 72, 1945 (1998); X.-C. Zhang, Z. Jiang, US 6,573,700 (2003)).

Dans ce schéma de mesure monocoup, la résolution temporelle et la largeur de la fenêtre de détection sont liées par la largeur spectrale du signal d'impulsion de sonde. Il s'agit d'une limite intrinsèque à ce principe d'encodage/décodage. Il est ainsi admis qu'une mesure de la résolution temporelle du dispositif est donnée par la relation suivante (F. G. Sun, Z. Jiang, X.-C. Zhang, Appl. Phys. Lett. 73, 2233 (1998); J. R. Fletcher, Opt. Exp. 10, 1425 (2002)) :

$$T_{Min} = \sqrt{T_0 . T_C} \ ,$$

où

-    $T_{Min}$ est la mesure de la résolution temporelle ;
-    $T_O$ est la durée de l'impulsion de sonde limitée par transformée de Fourier ;
-    $T_C$ est la durée de l'impulsion de sonde étirée.

Pour s'affranchir de la limite décrite ci-dessus, de nombreux efforts ont été faits, en particulier en vue de la caractérisation d'impulsions de particules accélérées, pour développer des dispositifs avec une résolution temporelle plus élevée. De nouvelles méthodes ont ainsi été proposées :

-    Le décodage interférométrique, qui décode l'information de biréfringence induite inscrite sur le spectre étiré de la sonde optique à partir d'une figure d'interférence. Cette méthode est indirecte de par la nécessité de reconstituer à partir d'un algorithme complexe le profil temporel (B. Yellampalle, K. Y. Kim, G. Rodriguez, J. H. Glownia, A. J.

Taylor Appl. Phys. Lett. 87, 211109 (2005) et K. Y. Kim, B. Yellampalle, G. Rodriguez, R. D. Averitt, A. J. Taylor, J. H. Glownia, Appl. Phys. Lett., 88, 041123 (2006)) ;

- Le codage / décodage spatial qui consiste à encoder/décoder le profil temporel du rayonnement térahertz sur le diamètre du signal d'impulsion de sonde (J. Shan, A. S. Weling, E. Knoesel, L. Bartels, M. Bonn, A. Nahata, G. A. Reider, T. F. Heinz, Opt. Lett. 25, 426 (2000) ; S. P. Jamison, J. Shen, A. M. MacLeod, W. A. Gillespie, D. A. Jaroszynski Opt. Lett.28, 1710 (2003) et K. Y. Kim, B. Yellampalle, A. J. Taylor, G. Rodriguez, J. H. Glownia, Opt. Lett. 32, 1968 (2007) et références citées dans ce dernier article).

Ces dispositifs s'affranchissent de la limite de résolution temporelle du décodage spectral et permettent le diagnostique monocoup d'impulsions térahertz de courte durée. Cependant aucune de ces solutions spatiales n'est applicable pour la mesure d'impulsions d'une durée supérieure à quelques picosecondes. De plus, ces nouvelles méthodes monocoups sont difficiles à mettre en oeuvre, en termes d'alignement des faisceaux, et peu adaptées au contexte de l'imagerie térahertz.

Une autre limitation importante des solutions monocoup existantes provient du décodage au moyen de polariseurs croisés, i.e en plaçant le milieu électro-optique entre deux polariseurs orientés de sorte que la sonde ne soit pas transmise en l'absence de champ électromagnétique. Cette forme de détection implique une réponse non linéaire du signal en fonction de l'amplitude de retard de phase. Dans la plupart des applications, l'analyseur est orienté volontairement pour recueillir un biais optique quasi-nul et obtenir un terme supplémentaire dans la fonction réponse de sorte à mesurer la bipolarité des signaux électro-optiques.

La fonction de réponse est alors définie par la relation $F_1$ suivante, valable pour les faibles retards de phase tels que $\Gamma + \Gamma_0 < 0.5$ rad :

$$I_{signal} = I_0 \cdot (\Gamma^2 + 2\Gamma.\Gamma_0 + \Gamma_0^2), \text{ où} \qquad (F_1)$$

- $I_{signal}$ est l'intensité du signal mesuré ;
- $I_0$ est l'intensité du signal de sonde ;
- $\Gamma$ est le retard de phase résultant de la biréfringence induite ; et
- $\Gamma_0$ est le biais optique, où retard de phase mesuré en l'absence de biréfringence induite.

Le cas décrit par la relation $F_1$ peut être simplifié en utilisant une détection de type «lock-in», et il est ainsi possible de s'affranchir du terme $\Gamma_0^2$. Néanmoins, même dans ce cas simplifié, actuellement peu concevable pour une détection monocoup, l'état de l'art montre que le signal mesuré comporte des distorsions et artefacts (Z. Jiang, F. G. Sun, Q. Chen, Appl. Phys. Lett. 74, 1191 (1999); Y. Li, Appl. Phys. Lett. 88, 251108 (2006)). Ces distorsions ne peuvent en général pas être corrigées sans la connaissance des caractéristiques du champ électromagnétique à caractériser, des caractéristiques du signal de sonde $I_0$ et des fluctuations du retard temporel entre ces deux impulsions. De plus, en raison de la dépendance du signal mesuré $I_{signal}$ avec l'intensité du signal de sonde $I_0$ et le biais optique $\Gamma_0$, le signal encodé est aussi perturbé le long du profil d'intensité gaussien de l'impulsion de sonde.

Un des domaines d'application importants de la mesure monocoup de radiations térahertz concerne le domaine de la spectroscopie térahertz dans le domaine temporel. Selon cette technique d'analyse, on cherche à caractériser, par exemple, les propriétés d'absorption d'un milieu optique dans la gamme des fréquences térahertz. Pour cela, le procédé de mesure consiste à réaliser deux acquisitions du profil de l'impulsion térahertz, avec et sans milieu optique. Cependant, ce procédé de mesure est perturbé par les fluctuations de la source d'impulsions térahertz qui en limite la sensibilité (S. P. Mickana, K.-S. Leeb, T.-M. Lub, J. Munch, D. Abbotta, X.-C. Zhang, Microelectronics Journal 33, 1033 (2002)). Un procédé de mesure de la biréfringence induite dans un milieu optique par une perturbation térahertz utilise une impulsion laser étirée, générée par un laser saphir-titan (G.Berden, A.F.G. van der Meer, S.P. Jamison, B. Steffen, E.-A. Knabbe, B. Schmidt, P. Schmüser, A.M. MacLeod, P.J. Phillips, W.A. Gillespie, Proceedings of EPAC 2006, Edinburgh, Scotland).

Les techniques de mesures monocoups sont toutes basées sur l'utilisation de source laser d'impulsions brèves, dont la durée se situe typiquement dans le domaine picoseconde (ps) et femtoseconde (fs). Les performances des dispositifs monocoups selon les méthodes décrites ci-dessus sont alors directement liées aux caractéristiques de ces impulsions telles que leur spectre, leur durée, mais aussi leur stabilité spatiale et temporelle.

De plus, les sources de rayonnements térahertz intenses actuelles et en développement, ou encore les accélérateurs de particules de nouvelle génération, sont basés principalement sur l'utilisation de sources laser impulsionnelles dans le domaine fs/ps dont les caractéristiques sont adaptées pour ces sources de rayonnement ou de particules. Dans la plupart des cas, les caractéristiques des impulsions délivrées par ces sources laser sont donc mal adaptées à la mise en oeuvre des méthodes monocoups décrites ci-dessus. Il existe actuellement sur le marché une large gamme concurrentielle de lasers impulsionnels pouvant être utilisés pour la génération de rayonnements térahertz ou l'accélération des particules, mais dont les caractéristiques des impulsions délivrées diffèrent.

La présente invention vise à pallier ces inconvénients de l'état de la technique en proposant un procédé selon la revendication 1 et un dispositif de mesure monocoup selon la revendication 8, basés sur le principe du codage / décodage spectral, qui soient compatibles avec l'ensemble des sources laser d'impulsions brèves (UV-NIR), et capable de fonctionner sur une gamme de fréquences térahertz large, par exemple 0.01 - 20 térahertz.

L'invention vise en particulier à mesurer la valeur du retard de phase induit dans le milieu optique perturbé, de manière absolue (amplitude et signe) et non déformée, c'est-à-dire qui soit indépendant de l'amplitude de ce retard de phase, et des caractéristiques du signal optique impulsionnel sur lequel est encodé ce retard de phase.

En outre, l'invention vise à réaliser un dispositif monocoup capable de détecter un retard de phase inférieur à 5 mrad, sur l'ensemble de la fenêtre spectrale d'analyse.

L'invention décrite ci-après propose de concentrer au moins une partie de l'énergie d'un signal optique impulsionnel, délivré par un laser, de façon à générer un supercontinuum sur lequel est ensuite encodée la variation de biréfringence d'un milieu optique traversé par une perturbation térahertz.

L'invention prévoit alors de calculer le retard de phase induit par la perturbation térahertz au moyen de la mesure de l'ellipticité de la polarisation du supercontinuum selon une configuration de détection simultanée.

À ce titre, l'invention concerne selon son acceptation la plus générale un procédé de mesure monocoup de la biréfringence transitoire induite dans un milieu optique (12) par au moins une perturbation térahertz (6), le procédé comportant une étape d'émission et de codage spectral d'un signal optique impulsionnel (2). L'étape de codage, qui comporte la génération d'un supercontinuum (3), est en outre combinée à une étape de décodage de l'ellipticité de polarisation du supercontinuum induite par la perturbation (6) du milieu (12), par décomposition du champ électrique du supercontinuum selon deux directions de polarisation et mesure simultanée des intensités $I_S$ et $I_P$ des deux composantes.

Selon des modes de réalisation particuliers :

- le procédé comporte une étape d'équilibrage des intensités $I_S$ et $I_P$ des deux composantes du champ électrique du supercontinuum ;
- l'étape de génération du supercontinuum présente une phase de propagation d'au moins une partie du signal optique impulsionnel selon un mode mono filament afin de s'affranchir des caractéristiques spectrales et temporelles du signal optique impulsionnel;
- le procédé comporte au moins une étape de compensation optique par correction des aberrations chromatiques et spatiales du dispositif ;
- l'étape de codage comporte une étape de mise en forme temporelle comprenant une phase d'étirement du supercontinuum consistant à propager le supercontinuum le long d'un trajet géométrique identique pour toutes les longueurs d'onde du supercontinuum ;
- le procédé comporte une étape de mise en forme de la distribution spectrale, spatiale et temporelle du supercontinuum ; et/ou
- le procédé comporte :

  i. une étape de séparation spatiale de la perturbation térahertz en deux perturbations térahertz d'analyse et de référence ;
  ii. une étape de décalage temporel des deux perturbations térahertz d'analyse et de référence ; et
  iii. une étape d'encodage des deux perturbations térahertz d'analyse et de référence sur une impulsion du supercontinuum.

L'invention concerne également un dispositif de mesure monocoup de la biréfringence transitoire induite dans un milieu optique par au moins une perturbation térahertz, le dispositif comportant une source d'émission d'un signal optique impulsionnel et des moyens de codage spectral du signal optique impulsionnel. Les moyens de codage spectral, qui comportent des moyens de génération d'un supercontinuum, sont combinés, par l'intermédiaire de moyens de décomposition du champ électrique du supercontinuum selon deux directions de polarisation S et P, à une unité de mesure simultanée des intensités $I_S$ et $I_P$ des deux composantes.

Selon des modes de réalisation particuliers :

- les moyens de génération du supercontinuum comportent des moyens de formation d'un mono-filament pour s'affranchir des caractéristiques spatiales et temporelles de la source optique impulsionnelle ;
- le dispositif comprenant des moyens de focalisations des impulsions optiques pour concentrer une partie de l'énergie jusqu'à atteindre le seuil de propagation selon un mode monofilament dans un milieu non linéaire ;

- le dispositif comprenant des moyens de focalisations des impulsions optiques de sorte à injecter une partie de ces impulsions dans une fibre optique ;
- le dispositif comprenant au moins un moyen de focalisation et un diaphragme placé sur le trajet optique de l'impulsion pour atténuer les effets de fluctuations spatiales sur la génération du supercontinuum ;
- les moyens de décomposition comportent des éléments d'équilibrage ;
- les éléments d'équilibrage sont constitués d'une lame quart d'onde associée à un polariseur ;
- les moyens de décomposition comportent des moyens de correction des aberrations chromatiques et spatiales du dispositif ;
- les moyens de décomposition comportent deux lames séparatrices polarisantes secondaires respectivement disposées sur le chemin optique des deux composantes du supercontinuum et présentant chacune une fonction inverse à celle du polariseur ;
- les moyens de génération présentent des moyens d'adaptation du supercontinuum constitués d'optiques dispersives pour maîtriser l'étirement temporel du supercontinuum ;
- l'une au moins des deux composantes du champ électrique du supercontinuum (3) est propagée vers un spectographe par le biais d'au moins une fibre optique ; et/ou
- le dispositif comporte en outre des moyens de séparation spatiale (50) de la perturbation térahertz (6) en deux perturbations térahertz d'analyse (6a) et de référence (6b) ainsi que des moyens de décalage temporel (52) de l'un des deux perturbation térahertz d'analyse (6a) et de référence (6b).

Selon un autre aspect, l'invention concerne l'utilisation d'un dispositif selon l'invention :

- pour la spectroscopie térahertz ; ou
- pour le diagnostic de faisceaux de particules chargées et accélérées.

La combinaison de la génération du supercontinuum et de la détection simultanée permet d'obtenir une mesure directe et non déformée de la variation de biréfringence transitoire avec une sensibilité uniforme sur la totalité de la fenêtre temporelle d'analyse et uniquement limité par le bruit de grenaille.

En effet, générer un supercontinuum à partir du signal optique impulsionnel permet de découpler le dispositif de mesure des caractéristiques du signal optique impulsionnel. D'autre part, le supercontinuum peut être généré de sorte à présenter une distribution d'intensité spectrale sensiblement plate sur la fenêtre de détection, ce qui permet d'améliorer la qualité de la mesure en obtenant un rapport signal sur bruit constant sur ladite fenêtre temporelle.

Cette homogénéisation de la fenêtre d'analyse peut se faire directement lors de la génération du supercontinuum, et peut également faire l'objet d'une étape supplémentaire après la génération de ce dernier au moyen d'optiques passives ou actives selon le degré d'homogénéisation souhaité.

Par ailleurs, la détection simultanée et équilibrée de l'intensité des composantes du supercontinuum est avantageuse en ce sens qu'elle permet de s'affranchir des fluctuations d'intensité du signal d'impulsions de sonde. La détection équilibrée permet également d'obtenir directement l'amplitude et le signe du retard de phase induit, sans les fautes dues aux polariseurs croisés. Appliquée à la caractérisation d'une perturbation téraherz, cette détection équilibrée permet de remonter à la valeur du champ électromagnétique térahertz dans un milieu optique.

La réalisation d'une détection équilibrée coup à coup et large bande permet la mesure de la variation transitoire de biréfringence dans des conditions uniquement limitées par le bruit de grenaille du détecteur.

L'utilisation de lames séparatrices polarisantes minimise avantageusement les fautes spatiales chromatiques. L'utilisation de moyens pour compenser les fautes chromatiques résiduelles améliore la stabilité de l'équilibrage des composantes du champ électrique du signal d'impulsions de sonde vis-à-vis des fluctuations spatiales du supercontinuum.

Le fait que le dispositif de mesure de l'ellipticité comporte deux fibres optiques permet en outre de s'affranchir des fluctuations spatiales sur la fente d'entrée du spectrographe.

Enfin, générer à partir de la perturbation térahertz deux perturbations térahertz décalés temporellement l'une par rapport à l'autre et les encoder sur deux parties distinctes du spectre du supercontinuum simultanément permet de s'affranchir des fluctuations de la source térahertz employée.

Ainsi, la méthode et le dispositif selon l'invention sont compatibles avec toutes les sources lasers impulsionnelles courtes (UV-NIR) et les performances de la mesure sont indépendantes de la source laser impulsionnelle utilisée. De plus, la sensibilité du dispositif n'est limitée que par le bruit de grenaille, et la fenêtre d'analyse temporelle peut être continûment adaptée entre 0,01 et 20 Thz avec une meilleure résolution temporelle que celle des dispositifs de l'art antérieur et une sensibilité au moins égale.

D'autres caractéristiques et avantages de l'invention ressortiront à la lecture qui suit d'exemples de réalisation détaillés, en référence aux figures qui représentent respectivement :

- la figure 1, une représentation schématique d'un premier exemple de réalisation d'un dispositif selon l'invention ;
- la figure 2, une représentation schématique d'un second exemple de réalisation d'un dispositif selon l'invention ;
- les figures 3a à 3c, des mesures mettant en lumière la stabilité et la sensibilité d'un dispositif selon l'invention ;
- la figure 4, un enregistrement monocoup du profil temporel du champ électrique induit dans un cristal de Zn:Te; et
- la figure 5, un enregistrement monocoup du profil temporel du champ électrique d'un paquet d'électrons et d'un champ électromagnétique térahertz décalés temporellement.

Bien que la description qui suit fait principalement référence aux champs électromagnétiques, il est entendu que le procédé et le dispositif de mesure selon l'invention peuvent être utilisés pour la mesure de la variation de biréfringence indépendamment de la nature de la perturbation induisant cette biréfringence transitoire dans le domaine térahertz. Notamment, la perturbation térahertz peut être induite par une onde acoustique, un choc par une impulsion laser, etc.

De ce fait, le terme de perturbation térahertz vise tout type de champ électromagnétique, d'onde acoustique ou autre perturbation appartenant au domaine des fréquences térahertz.

Par ailleurs, le terme milieu optique, utilisé ci-après, fait référence à tout milieu physique (solide, liquide ou gaz) susceptible de présenter une biréfringence induite par une perturbation externe.

En outre, le codage par modulation de polarisation induit par la biréfringence du milieu optique est décrit, ci-après, dans le cas particulier de la traversée du milieu optique par le supercontinuum. Toutefois, sans sortir du cadre de l'invention, le procédé et le dispositif s'appliquent également à tout autre moyen de modulation de polarisation tel que, par exemple, la réflexion à la surface dudit milieu optique.

Les termes de génération du supercontinuum se rapporte au processus bien connu qui consiste à modifier par différents processus non linéaires le profil spectral d'intensité $I(\lambda)$ d'une impulsion optique de sorte à obtenir un élargissement spectral très prononcé. Il existe une grande variété de méthodes pour générer des supercontinua aux caractéristiques elles aussi variées. La description qui suit d'exemples de réalisation de l'invention décrit quelques modes de génération avantageux dans le contexte de l'invention.

De plus, le supercontinuum étant, dans ce contexte, utilisé comme un moyen permettant de réaliser un dispositif compatible avec l'ensemble des sources laser impulsionnelles, le terme supercontinuum s'étend à tout processus d'amplification d'une partie du spectre dudit supercontinuum sans sortir du cadre de l'invention.

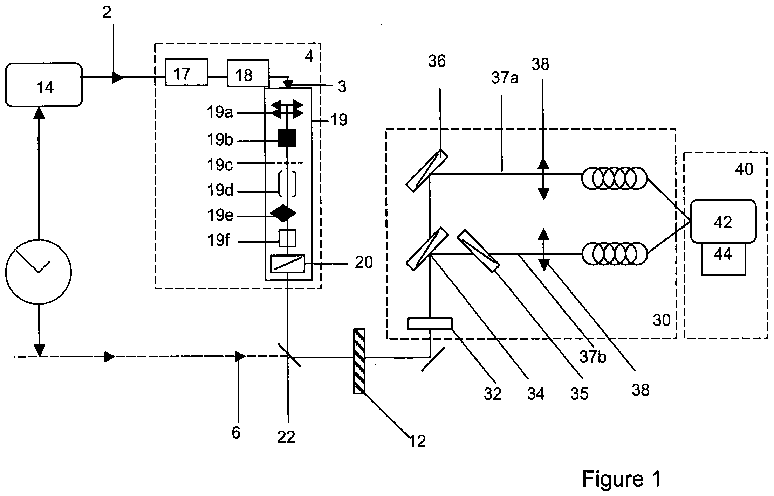

Le procédé de mesure selon l'invention va maintenant être décrit en référence à un premier exemple de réalisation représenté sur la figure1.

Dans cet exemple de réalisation, un milieu optique 12 est soumis à une perturbation térahertz 6, sous la forme d'un champ électromagnétique térahertz. Sous l'effet de ce champ électromagnétique térahertz 6, la biréfringence du milieu optique 12 se trouve modifiée. Il s'établit alors dans le milieu optique 12 un régime transitoire, pendant lequel le milieu optique 12 présente une biréfringence transitoire caractérisée par deux axes optiques orthogonaux (ou lignes neutres) d'indices optiques $n_e$ $(\lambda,t)$ et $n_o$ $(\lambda,t)$ avec $\lambda$ et t représentant respectivement la longueur d'onde et le temps.

Selon ce premier exemple de réalisation, le procédé de mesure selon l'invention comprend une première étape d'émission d'un signal optique impulsionnel 2 à partir d'une source d'impulsions optiques 14, tel qu'une source laser d'impulsions ultracourtes dans le domaine temporel des femtoseconde (fs) ou des picosecondes (ps). Cette source d'impulsions optiques 14 est synchronisée avec la perturbation térahertz 6.

Le signal optique impulsionnel 2 se propage au travers de moyens de génération 4 d'un supercontinuum 3. Ainsi, une partie de l'énergie du signal optique impulsionnel 2 est injectée par des moyens de focalisation 17 dans un matériau non linéaire 18, tel qu'un substrat de saphir, de sorte à atteindre l'intensité nécessaire et suffisante pour que le signal optique impulsionnel 2 se propage dans le matériau non linéaire 18 pour interagir efficacement avec ledit matériau non linéaire 18, selon des processus non linéaires. Ainsi, une partie du signal optique impulsionnel 2 est convertie en un supercontinuum 3.

Avantageusement, les moyens de génération 4 du supercontinuum 3 comprennent également des moyens d'adaptation 19 du supercontinuum 3. Ainsi, le supercontinuum 3 est collimaté et son étirement temporel est adapté à une fenêtre d'analyse prédéterminée au moyen d'optiques dispersives.

Le supercontinuum 3 est également polarisé linéairement par des moyens de polarisation 20, et sa polarisation est orientée de telle sorte que la traversée du milieu optique 12 perturbé par la perturbation térahertz 6 convertisse la polarisation linéaire en une polarisation elliptique.

Selon une variante (non représentée), la génération du supercontinuum 3 est réalisée dans la source optique impulsionnelle 14. C'est par exemple le cas lors de l'utilisation de lasers dits blancs.

Le supercontinuum 3 est ensuite propagé dans une partie perturbée du milieu optique 12 de sorte à sonder la biréfringence transitoire induite par la perturbation térahertz 6. Le retard temporel entre le supercontinuum 3 et la perturbation térahertz est ajustée pour que les deux signaux se recouvrent temporellement dans le milieu optique 12.

De façon avantageuse, la distribution spectrale d'intensité du supercontinuum 3 est ajustée de sorte à présenter un profil sensiblement plat. Cette homogénéisation de la fenêtre d'analyse peut se faire directement lors de la génération du supercontinuum 3, et peut aussi avantageusement faire l'objet d'une étape supplémentaire après la génération de ce dernier au moyen d'optiques passives ou actives selon le degré d'homogénéisation souhaité.

Le procédé comporte ensuite une étape de décodage spectrale par mesure de l'ellipticité pour chaque longueur d'onde du supercontinuum 3. En l'absence de perturbation, la polarisation linéaire du champ électrique du supercontinuum 3, à la sortie le milieu optique 12, est transformée en une polarisation circulaire via des moyens de polarisation 32. Ensuite le champ électrique du supercontinuum 3 est décomposé simultanément selon deux directions de polarisation orthogonales notées P et S.

En théorie, cette décomposition de la polarisation du supercontinuum 3 devrait permettre d'obtenir une détection équilibrée, c'est-à-dire pour laquelle les intensités $I_S$ et $I_P$ des deux composantes du champ électrique du supercontinuum 3 selon les deux directions de polarisation S et P sont égales pour toutes les longueurs d'onde, en l'absence de radiation térahertz 6.

Cependant, les propriétés des éléments optiques sont telles que l'équilibrage parfait est impossible à réaliser sur la largeur spectrale du supercontinuum 6. Ceci introduit un biais dans la mesure de l'ellipticité qui limite la sensibilité du dispositif s'il fluctue coup à coup.

Selon le procédé de l'invention, les variations coup à coup de l'équilibrage sont minimisées. L'étape d'équilibrage comporte en effet une phase de compensation des fautes chromatiques du dispositif.

L'étape de mesure simultanée des intensités $I_P$ et $I_S$ des deux composantes du champ électrique du supercontinuum 3 permet de déduire la variation transitoire de biréfringence et, dépendant de l'application, les caractéristiques de la perturbation térahertz 6 (intensité, profil temporel, etc.) et des informations sur le milieu optique 12 perturbé.

La figure 1 illustre plus particulièrement un exemple de dispositif de mesure de mise en oeuvre du procédé ci-dessus.

Dans ce premier exemple de réalisation, la perturbation térahertz 6, ici un champ électrique térahertz, est produit par une impulsion d'électrons relativistes d'une durée de quelques picosecondes, délivré par un accélérateur photodéclenché par une source d'impulsions optiques 14, en l'occurrence un laser femtosecondes.

La source d'impulsions optiques 14 est constituée par une source laser Ti:Sa amplifiée qui délivre un signal optique impulsionnel 2 de 160 femtosecondes présentant une longueur d'onde de 790 nanomètres. La source d'impulsions optiques 14 est synchronisée sur l'onde radiofréquence accélératrice du paquet d'électrons relativistes composant la perturbation térahertz 6 par asservissement de la longueur de la cavité laser de l'oscillateur de la source d'impulsions optiques 14. La synchronisation entre l'impulsion d'électrons relativistes composant la perturbation térahertz 6 et la source d'impulsions optiques 14 est d'environ 1 ps.

Dans cet exemple de réalisation, le milieu optique 12 perturbé est un cristal de Zn:Te. On cherche alors à caractériser l'effet du passage du faisceau d'électrons au voisinage de ce milieu optique 12, c'est-à-dire à mesurer la biréfringence induite dans le cristal de Zn:Te par le champ électrique des électrons relativistes et la perturbation térahertz générée lors du passage dudit faisceau d'électrons à travers une feuille de métal.

Le milieu optique 12 est coupé selon le plan (110) et placé à environ 3-4 mm de l'axe de propagation du faisceau d'électrons. Dans ces conditions, le champ électrique des électrons relativistes et donc la perturbation térahertz 6 est dans le plan (110) du cristal de Zn:Te. Il en résulte une biréfringence induite dans le milieu optique 12 caractérisée par deux axes optiques dans le plan (110) et orientés à 45 degrés par rapport à la direction [001]. La perturbation térahertz 6 est un champ électromagnétique qui traverse le milieu optique 12 et induit aussi une biréfringence transitoire.

Le dispositif selon l'invention comporte également des moyens de génération 4 d'un supercontinuum 3 polarisé linéairement, à partir du signal optique impulsionnel 2 émis par la source d'impulsions optiques 14. Avantageusement, le signal optique impulsionnel 2 appartient au domaine des ultraviolets jusqu'au proche infrarouge.

Les moyens de génération de supercontinuum 4 sont constitués de moyens de focalisation 17 permettant d'adapter le faisceau du signal optique impulsionnel 2 de sorte à atteindre un mono filament dans le milieu non linéaire 18. La traversée du milieu non linéaire 18 comporte une partie pendant laquelle la propagation a lieu selon un mono filament et génère un supercontinuum 3 à partir du signal optique impulsionnel. En sortie du milieu non linéaire 18, l'intensité de supercontinuum 3 et sa distribution spatiale, spectrale et temporelle sont adaptées aux caractéristiques de la perturbation térahertz 6 par le biais des moyens d'adaptation 19.

Selon le premier exemple de réalisation, les moyens de focalisation 17 comprennent une lentille, un diaphragme et un filtre d'intensité variable. D'autre part, le milieu non linéaire 18 est un saphir de 3 millimètres d'épaisseur dont l'axe optique est orienté perpendiculairement à sa surface. Les moyens de focalisation 17 et le milieu non linéaire 18 sont ajustés de sorte que 1 µJ du signal optique impulsionnel 2 atteigne, dans le milieu non linéaire 18, une intensité de l'ordre de $10^{11}$ W/cm$^2$ correspondant au seuil d'autofocalisation, en focalisant avec une ouverture numérique inférieure à 0,1.

Selon les caractéristiques de la source d'impulsions optiques 14 (puissance crête, longueur d'onde, mode spatial), le milieu non linéaire 18 et les moyens de focalisation 17 peuvent toujours être adaptés de sorte à obtenir une longueur pour laquelle l'interaction entre le signal optique impulsionnel 2 et le milieu non linéaire 18 est suffisante pour générer un supercontinuum 3. Ainsi, un supercontinuum 3 peut par exemple être généré à partir de quelques nJ d'une signal optique impulsionnel 2 propagé dans le coeur d'une fibre optique, y compris dans des fibres à cristaux photoniques.

Les moyens d'adaptation 19 des caractéristiques du supercontinuum 3 comportent avantageusement une optique de collimation 19a, ainsi que des éléments passifs ou actifs 19b permettant d'adapter le spectre du supercontinuum 3 à la variation de biréfringence à mesurer.

Avantageusement, les moyens d'adaptation 19 comprennent en outre un filtre diélectrique passe-bas 19c et éventuellement un dispositif actif 19d capable de modifier le profil spectral et temporel du supercontinuum 3.

Éventuellement, les moyens d'adaptation 19 comprennent également une étape d'amplification optique d'une partie ou de la totalité du supercontinuum 3 par le biais d'éléments d'amplification 19e bien connus de l'homme du métier.

Enfin, les moyens d'adaptation 19 du supercontinuum 3 comprennent avantageusement un étireur ou compresseur 19f par dérive de fréquence de la durée du supercontinuum 3.

Selon un mode de réalisation, le supercontinuum 3 est collimaté à l'aide d'une lentille achromatique qui est responsable pour la plupart de la dispersion sur le chemin optique entre le milieu non linéaire 18 et le milieu optique 12. L'étirement spectral entre 460 et 760 nm est alors $T_C$ = 2,25 ps, avec une valeur de la durée d'impulsion obtenue par transformée de Fourier du spectre égale à $T_0$ = 4,4 fs, $T_{min}$ = 100 fs, d'après la relation $F_1$.

Selon un autre mode, le supercontinuum 3 est de préférence étiré par 2 passages dans 20 cm de SF57, ce qui résulte en un étirement $T_C$ = 60 ps sur la largeur spectrale transmise par une cristal de Zn:Te (550-730 nm). La transformée de Fourier de cette distribution spectrale équivaut à une durée d'impulsion $T_0$ = 6,6 fs. Dans ces conditions $T_{min}$ = 630 fs.

Les moyens d'adaptation 19 comprennent également un polariseur 20 permettant de polariser linéairement le supercontinuum 3 avant d'être dirigé par des moyens de propagation 22 vers le milieu optique 12.

Le trajet optique du supercontinuum présente une longueur adaptée, de sorte qu'il traverse le milieu optique 12 au moment de la biréfringence transitoire induite par la perturbation térahertz 6.

Il est à noter que la direction de la polarisation du supercontinuum 3 est adaptée à l'orientation des axes optiques caractérisant la biréfringence transitoire du milieu optique 12 de sorte que ladite biréfringence convertisse la polarisation linéaire du supercontinuum 3 en une polarisation elliptique.

Dans cet exemple de réalisation, le supercontinuum 3 traverse le milieu optique 12, perpendiculairement au plan (110) du cristal, l'axe [001] étant orthogonale à la direction k de propagation du supercontinnum 3. La biréfringence transitoire du milieu optique 12 est alors caractérisée par deux axes optiques dans le plan (110). La direction de polarisation du supercontinuum 3 est avantageusement orientée à 45 degrés desdits axes optiques.

La biréfringence induite par la perturbation térahertz 6 dans le milieu optique 12 convertit la polarisation linéaire du supercontinuum 3 en une polarisation elliptique. Le déphasage, noté $\Gamma(\lambda)$, entre les deux composantes du champ électrique du signal d'impulsions de sonde, selon les deux axes principaux de la biréfringence induite, est alors fonction des composantes spectrales du supercontinuum 3.

Le dispositif selon le premier exemple de réalisation comporte en outre des moyens de décodage par décomposition et mesure de l'ellipticité du supercontinuum.

Les moyens de décomposition 30 sont constitués d'une lame quart d'onde 32, d'une première lame séparatrice polarisante 34, de deux lames séparatrices polarisantes secondaires 35, 36, ainsi que deux lentilles achromatiques 38.

La lame quart d'onde 32, optimisée pour le domaine du visible (450-800 nanomètres), est placée et orientée de sorte à convertir la polarisation rectiligne du supercontinnum 3, en l'absence de perturbation térahertz 6, en une polarisation circulaire.

Le supercontinuum 3 est ensuite propagé vers une première lame séparatrice polarisante 34 qui décompose son champ électrique selon deux polarisations perpendiculaires S et P. Les lames séparatrices polarisantes secondaires 35 et 36 sont ensuite placées respectivement sur les chemins optiques 37a et 37b des deux faisceaux décomposés, de sorte que chaque composante soit une fois transmise par la lame 34 puis réfléchie par la lame polarisante secondaire 36, ou bien une fois réfléchie par la lame 34 puis transmise par la lame polarisante secondaire 35. Dans ces conditions, chaque faisceau subit finalement les mêmes transformations optiques. Ainsi, les fautes chromatiques dues aux polariseurs sont corrigées par compensation.

De préférence, la première lame séparatrice polarisante 34 et les lames séparatrices polarisantes secondaires 35,36 sont constituées de grilles métalliques déposées sur des substrats minces, ce qui permet de garantir un coefficient d'extinction élevé et uniforme dans le domaine du visible en évitant une déviation du faisceau selon sa longueur d'onde.

Les intensités $I_S$ et $I_P$ de chaque longueur d'onde sont ensuite mesurées dans une unité de mesure 40. L'unité de mesure 40 est constituée au moins d'un spectrographe 42 et d'un détecteur multicanal 44. L'intensité $I_P(\lambda)$ et $I_S(\lambda)$ des deux composantes du supercontinuum 3 sont alors détectées simultanément pour chaque impulsion de supercontinuum 3.

Avantageusement les deux composantes du supercontinuum 3 sont couplées à l'aide de fibres optiques qui assurent le positionnement sur la fente d'entrée du spectrographe 42 ainsi que le déport de l'unité de mesure.

De la mesure réalisée par le spectrographe, il est possible de déduire le retard de phase entre les deux composantes du champ électrique $\Gamma(\lambda)$ du supercontinuum par la relation $F_2$ suivante :

$$\sin \Gamma(\lambda) = (I_p(\lambda) - I_S(\lambda)) / (I_P(\lambda) + I_S(\lambda)) \qquad (F2)$$

La variation de la biréfringence en fonction du temps $\Gamma(t)$ se déduit directement de la connaissance de l'étirement spectral du supercontinuum 3.

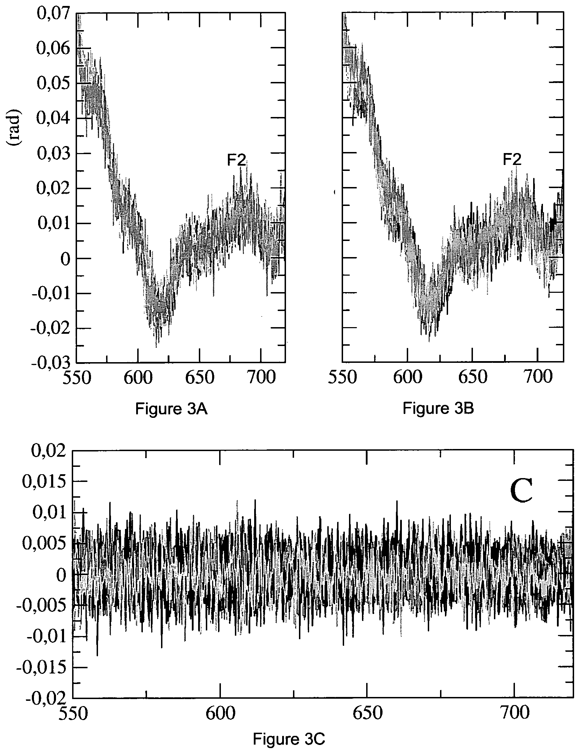

Selon une variante, les deux composantes du supercontinuum 3 sont focalisées après les lames séparatrices polarisantes secondaires 35, 36 dans un assemblage de fibres optiques composé de 2 fibres de silice d'un diamètre de 400 $\mu$m, dont l'une des extrémités est positionnée sur la fente d'entrée d'un spectrographe. La résolution spectrale du dispositif est 1 nm. Les spectres sont enregistrés à l'aide d'une caméra CCD. La stabilité coup à coup de l'équilibrage obtenu dans ces conditions est illustrée sur la figure 3B ci-après.

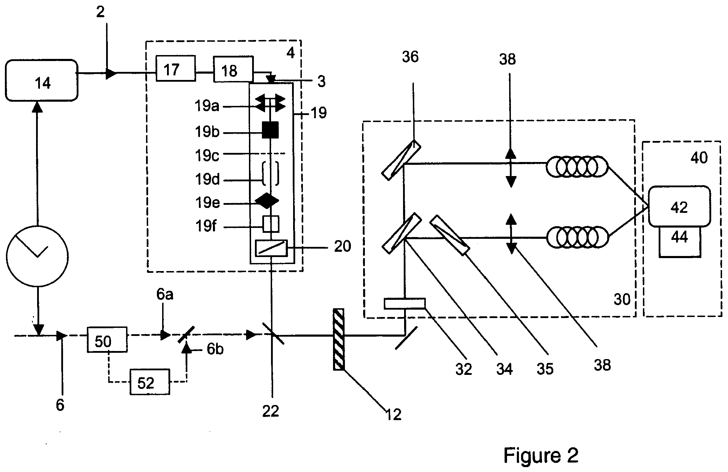

Un second exemple de réalisation d'un dispositif de mesure selon l'invention va maintenant être décrit en référence à la figure 2.

Dans cet exemple de réalisation, dans un premier temps, un premier champ électromagnétique térahertz, nommé perturbation térahertz d'analyse 6a, ainsi qu'un second champ électromagnétique térahetz, nommé perturbation térahertz de référence 6b, sont générés à partir de la perturbation térahertz 6. L'intensité du champ électromagnétique de la perturbation térahertz de référence 6b est proportionnelle à l'intensité du champ électromagnétique de la perturbation térahertz d'analyse 6a avant le milieu optique 12.

Ainsi, dans un premier temps, deux perturbations térahertz d'analyse 6a et de référence 6b sont créées à partir d'une seule impulsion térahertz initiale puis décalés temporellement. Pour ce faire, une perturbation 6 initiale est décomposée, par le biais de moyens de séparation spatial 50, en deux faisceaux correspondant aux pertubations térahertz d'analyse 6a et de référence 6b. Le faisceau correspondant à la perturbation térahertz de référence 6b est propagé à travers le milieu optique 12 à caractériser.

Par ailleurs, le retard optique entre les faisceaux 6a et 6b est adapté, par le biais de moyens de retardement 52, disposés sur le trajet optique des perturbations térahertz d'analyse 6a ou de référence 6b, de sorte à décaler temporellement les deux faisceaux 6a et 6b. Ainsi, ces deux faisceaux sont propagés dans le milieu optique 12 et encodés successivement sur la même impulsion du supercontinuum 3.

Dans un deuxième temps, les deux perturbations térahertz d'analyse 6a et de référence 6b sont encodées sur deux parties distinctes du spectre du supercontinuum 3 et le profil des deux perturbations térahertz d'analyse 6a et de référence 6b est détecté, en un coup unique selon le procédé précédemment décrit. La perturbation de référence 6b permet de corriger les fluctuations coup à coup de la source térahertz.

Selon un mode de réalisation alternatif, les perturbations térahertz d'analyse 6a et de référence 6b sont générées à partir d'un faisceau d'électrons accélérés. Pour ce faire, une feuille de métal, ou tout autre élément permettant de générer un rayonnement de transition, est disposé sur le trajet du faisceau d'électrons accélérés.

Ainsi, le champ électromagnétique térahertz généré constitue la perturbation térahertz d'analyse 6a tandis que le champ électrique des électrons constitue la perturbation térahertz de référence 6b. La perturbation térahertz d'analyse 6a est retardée au moyen d'un substrat dispersif 52. Puis, les faisceaux correspondant aux perturbations térahertz d'analyse 6a et de référence 6b sont propagés comme précédemment jusque dans le milieu optique 12 à caractériser de sorte à induire une biréfringence transitoire dans le milieu optique 12, détecté de la même façon que précédemment.

Les figures 3A à 3C représentent des mesures mettant en lumière la stabilité et la sensibilité d'un dispositif selon l'invention.

La figure 3A représente le signal $F_2$, en l'absence de radiation térahertz, enregistré sur 20 impulsions consécutives du signal optique impulsionnel 2, à la cadence de 10 Hz. La figure 3B, illustre la même mesure 15 min plus tard.

La figure 3C montre les fluctuations coup à coup calculées par rapport à la moyenne de 20 impulsions de sonde consécutives et présente clairement la stabilité du dispositif selon l'invention.

Le champ électrique dans le milieu optique 12 peut être calculé à partir de la mesure absolue du retard de phase. Pour le cas considéré dans cette réalisation, le champ électrique se déduit de la phase par la relation $F_3$ où :

$$\Gamma(\lambda) = 2 \cdot \pi \cdot d \cdot n^3(\lambda) \cdot r_{41} \cdot E(\lambda) / \lambda,$$

où

- d est l'épaisseur du milieu optique 12 de cristal de Zn:Te ;
- $n(\lambda)$ est l'indice optique du le milieu optique 12 ;
- $r_{41}$ est le coefficient électro-optique du le milieu optique 12 (= $4,25 \times 10^{-12}$m/W) ;
- E est le champ électrique ; et
- $\lambda$ est la longueur d'onde.

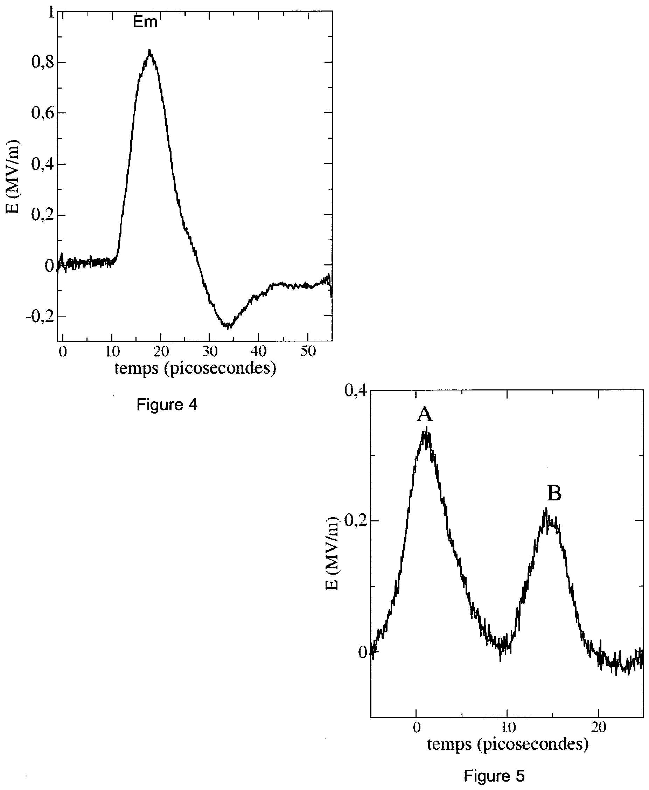

Sur la figure 4, un enregistrement monocoup Em du profil temporel du champ électrique induit dans un cristal de Zn:Te avec une épaisseur de 0,5 mm par un paquet d'électrons relativistes de 8 MeV se propageant au voisinage de ce cristal.

La figure 5 illustre par ailleurs un enregistrement monocoup du profil temporel du champ électrique d'un paquet d'électrons A et d'un champ électromagnétique térahertz B décalés temporellement et encodés sur deux parties distinctes de supercontinuum.

L'invention n'est pas limitée aux exemples de réalisation décrits et représentés. Il est entendu que l'homme du métier est à même de réaliser différentes variantes de l'invention sans sortir du cadre du brevet.

Par exemple, le dispositif et la méthode de mesure selon l'invention pourraient être utilisés pour la caractérisation de sources optiques ultra-brèves.

## Revendications

1. Procédé de mesure monocoup de la biréfringence transitoire induite dans un milieu optique (12) par au moins une perturbation térahertz (6), le procédé comportant une étape d'émission et de codage spectral d'un signal optique impulsionnel (2), **caractérisé en ce que** l'étape de codage, qui comporte la génération d'un supercontinuum (3) dans un état de polarisation déterminé, est combinée à une étape de décodage de l'ellipticité de polarisation du supercontinuum induite par la perturbation (6) du milieu (12), par décomposition du champ électrique du supercontinuum selon deux directions de polarisation et mesure simultanée des intensités $I_S$ et $I_P$ des deux composantes, la mesure monocoup consistant à encoder le profil temporel de la perturbation térahertz (6) par un changement de phase sur le profil spectral d'une seule impulsion du supercontinuum (3) générée, temporellement étirée et propagée de sorte que l'impulsion du supercontinuum (3) et la perturbation térahertz (6) se recouvrent temporellement dans le milieu optique (12).

2. Procédé de mesure monocoup selon la revendication 1, comportant en outre une étape d'équilibrage des intensités $I_S$ et $I_P$ des deux composantes du champ électrique du supercontinuum (3).

3. Procédé de mesure selon la revendication 1 ou 2, dans lequel l'étape de génération du supercontinuum (3) présente une phase de propagation d'au moins une partie du signal optique impulsionnel (2) selon un mode mono filament afin de s'affranchir des caractéristiques spectrales et temporelles du signal optique impulsionnel (2).

4. Procédé de mesure selon l'une quelconque des revendications 1 à 3, comportant au moins une étape de compensation optique par correction des aberrations chromatiques et spatiales du dispositif.

5. Procédé de mesure selon l'une quelconque des revendications 1 à 4, dans lequel l'étape de codage comporte une étape de mise en forme temporelle comprenant une phase d'étirement du supercontinuum (3) consistant à propager le supercontinuum (3) le long d'un trajet géométrique identique pour toutes les longueurs d'onde du supercontinuum (3).

6. Procédé de mesure selon la revendication 4, comportant une étape de mise en forme de la distribution spectrale, spatiale et temporelle du supercontinuum (3).

7. Procédé de mesure selon l'une quelconque des revendications précédentes, le procédé comportant :

   i. une étape de séparation spatiale de la perturbation térahertz (6) en deux perturbations térahertz d'analyse (6a) et de référence (6b) ;
   ii. une étape de décalage temporel des deux perturbations térahertz d'analyse (6a) et de référence (6b) ; et
   iii. une étape d'encodage des deux perturbations térahertz d'analyse (6a) et de référence (6b) sur une impulsion du supercontinuum (3).

8. Dispositif de mesure monocoup de la biréfringence transitoire induite dans un milieu optique (12) par au moins une perturbation térahertz (6), le dispositif comportant une source (14) d'émission d'un signal optique impulsionnel (2) et des moyens de codage spectral (4, 12) du signal optique impulsionnel (2), **caractérisé en ce que** les moyens de codage spectral (4, 12), qui comportent des moyens de génération (4) d'un supercontinuum (3) dans un état de polarisation déterminé, sont combinés, par l'intermédiaire de moyens de décomposition (30) du champ électrique du supercontinuum selon deux directions de polarisation S et P, à une unité (40) de mesure simultanée des intensités $I_S$ et $I_P$ des deux composantes, lesdits moyens de codage spectral permettant d'encoder le profil temporel de la perturbation térahertz (6) par un changement de phase sur le profil spectral d'une seule impulsion du supercontinuum (3) générée, temporellement étirée et propagée de sorte que l'impulsion du supercontinuum (3) et la perturbation térahertz (6) se recouvrent temporellement dans le milieu optique (12).

9. Dispositif selon la revendication 8, dans lequel les moyens de génération (4) du supercontinuum (3) comportent des moyens de formation (17,18) d'un mono-filament pour s'affranchir des caractéristiques spatiales et temporelles de la source optique impulsionnelle (14).

10. Dispositif de mesure selon la revendication 9, le dispositif comprenant des moyens de focalisations (17) des impulsions optiques (2) pour concentrer une partie de l'énergie jusqu'à atteindre le seuil de propagation selon un mode monofilament dans un milieu non linéaire (18).

11. Dispositif de mesure selon la revendication 9, le dispositif comprenant des moyens de focalisations (17) des impulsions optiques (2) de sorte à injecter une partie de ces impulsions dans une fibre optique (18).

12. Dispositif de mesure selon l'une quelconque des revendications 9 à 11, le dispositif comprenant au moins un moyen de focalisation (17) et un diaphragme placé sur le trajet optique de l'impulsion (2) pour atténuer les effets de fluctuations spatiales de l'impulsion (2) sur la génération du supercontinuum (3).

13. Dispositif selon l'une quelconque des revendications 9 à 12, dans lequel les moyens de décomposition (30) comportent des éléments d'équilibrage (32,34).

14. Dispositif selon l'une quelconque des revendications 9 à 13, dans lequel les moyens de décomposition (30) comportent deux lames séparatrices polarisantes secondaires (35, 36) respectivement disposées sur le chemin optique des deux composantes du supercontinuum (3) et présentant chacune une fonction inverse à celle du polariseur (34).

15. Dispositif selon l'une quelconque des revendications 8 à 13, le dispositif comportant en outre des moyens de séparation spatiale (50) de la perturbation térahertz (6) en deux perturbations térahertz d'analyse (6a) et de référence (6b) ainsi que des moyens de décalage temporel (52) de l'une des deux perturbations térahertz d'analyse (6a) et de référence (6b).

**Patentansprüche**

1. Verfahren zur einmaligen Messung der vorübergehenden Doppelbrechung in einem optischen Medium (12), welche durch mindestens eine Tetrahertz-Störung (6) induziert wird, wobei das Verfahren einen Schritt des Sendens und des spektralen Codierens eines optischen Impulssignals (2) beinhaltet, **dadurch gekennzeichnet, dass** der Schritt des Codierens, welcher das Erzeugen eines Superkontinuums (3) in einem bestimmten Polarisierungszustand beinhaltet, mit einem Schritt des Decodierens der Polarisierungs-Elliptizität des Superkontinuums beinhaltet, welche durch die Störung (6) des Mediums (12) induziert wird, durch Zerlegung des elektrischen Feldes des Superkontinuums in zwei Polarisierungsrichtungen und gleichzeitige Messung der Intensitäten $I_S$ und $I_P$ der beiden Komponenten, wobei die einmalige Messung darin besteht, das Zeitprofil der Tetrahertz-Störung (6) durch einen Phasenwechsel am spektralen Profil eines einzigen Impulses des Superkontinuums (3) zu codieren, welcher erzeugt, zeitlich gedehnt und so fortgepflanzt wird, dass der Impuls des Superkontinuums (3) und die Tetrahertz-Störung (6) einander zeitlich im optischen Medium (12) überlagern.

2. Verfahren zur einmaligen Messung nach Anspruch 1, welches zudem einen Schritt des Ausgleichens der Intensitäten $I_S$ und $I_P$ der beiden Komponenten des elektrischen Feldes des Superkontinuums (3) beinhaltet.

3. Messverfahren nach Anspruch 1 oder 2, bei welchem der Schritt des Erzeugens des Superkontinuums (3) eine Fortpflanzungsphase von mindestens einem Teil des optischen Impuls-Signals (2) in einem Monofilamentmodus beinhaltet, um sich von den spektralen und zeitlichen Merkmalen des optischen Impulssignals (2) zu befreien.

4. Messverfahren nach einem der Ansprüche 1 bis 3, welches mindestens einen Schritt des optischen Kompensierens durch Korrektur der chromatischen und räumlichen Aberrationen der Vorrichtung beinhaltet.

5. Messverfahren nach einem der Ansprüche 1 bis 4, bei welchem der Schritt des Codierens einen Schritt der zeitlichen Formung beinhaltet, beinhaltend eine Phase des Dehnens des Superkontinuums (3), welche darin besteht, das Superkontinuum (3) entlang einer geometrischen Strecke fortzupflanzen, welche für alle Wellenlänge des Superkontinuums (3) identisch ist.

6. Messverfahren nach Anspruch 4, welches einen Schritt der Formung der spektralen, räumlichen und zeitlichen Verteilung des Superkontinuums (3) beinhaltet.

7. Messverfahren nach einem der vorhergehenden Ansprüche, wobei das Verfahren folgende Schritte beinhaltet:

    i. einen Schritt der räumlichen Trennung der Tetrahertz-Störung (6) in zwei Tetrahertz-Störungen, nämlich eine Analyse-Tetrahertz-Störung (6a) und eine Referenz-Tetrahertz-Störung (6b);
    ii. einen Schritt des zeitlichen Verschiebens der beiden Tetrahertz-Störungen, nämlich der Analyse-Tetrahertz-Störung (6a) und der Referenz-Tetrahertz-Störung (6b); und
    iii. einen Schritt des Codierens der beiden Tetrahertz-Störungen, nämlich der Analyse-Tetrahertz-Störung (6a) und der Referenz-Tetrahertz-Störung (6b) auf einen Impuls des Superkontinuums (3).

8. Vorrichtung zur einmaligen Messung der vorübergehenden Doppelbrechung in einem optischen Medium (12), welche durch mindestens eine Tetrahertz-Störung (6) induziert wird, wobei die Vorrichtung eine Sendequelle (14) eines optischen Impulssignals (2) und Mittel zum spektralen Codieren (4, 12) des optischen Impulssignals (2) besitzt, **dadurch gekennzeichnet, dass** die Mittel zum spektralen Codieren (4, 12), welche Mittel zum Erzeugen (4) eines Superkontinuums (3) in einem bestimmten Polarisierungszustand enthalten, kombiniert werden durch Vermittlung von Mitteln zum Zerlegen (30) des elektrischen Feldes des Superkontinuums in zwei Polarisierungsrichtungen S und P, mit einer Einheit (40) zum gleichzeitigen Messen der Intensitäten $I_S$ und $I_P$ der beiden Komponenten, wobei die Mittel zum spektralen Codieren es ermöglichen, das Zeitprofil der Tetrahertz-Störung (6) durch einen Phasenwechsel am spektralen Profil eines einzigen Impulses des Superkontinuum (3) zu codieren, welcher erzeugt, zeitlich gedehnt und so fortgepflanzt wird, dass der Impuls des Superkontinuums (3) und die Tetrahertz-Störung (6) einander zeitlich im optischen Medium (12) überlagern.

9. Vorrichtung nach Anspruch 8, bei welchem die Mittel zum Erzeugen (4) des Superkontinuums (3) Mittel zum Bilden (17, 18) eines Monofilamentes beinhalten, um sich von den spektralen und zeitlichen Merkmalen der optischen Impulsquelle (14) zu befreien.

10. Messvorrichtung nach Anspruch 9, wobei die Vorrichtung Mittel zum Fokalisieren (17) der optischen Impulse (2) beinhaltet, um einen Teil der Energie bis zum Erreichen des Fortpflanzungsgrenzwertes in einem Monofilamentmodus in einem nicht linearen Medium (18) zu konzentrieren.

11. Messvorrichtung nach Anspruch 9, wobei die Vorrichtung Mittel zum Fokalisieren (17) der optischen Impulse (2) beinhaltet, um einen Teil dieser Impulse in einen Lichtwellenleiter (18) einzuspeisen.

12. Messvorrichtung nach einem der Ansprüche 9 bis 11, wobei die Vorrichtung mindestens ein Mittel zum Fokalisieren (17) und eine Blende besitzt, welche auf der optischen Strecke des Impulses (2) platziert ist, um die räumlichen Fluktuationseffekte des Impulses (2) auf die Erzeugung des Superkontinuums (3) abzuschwächen.

13. Vorrichtung nach einem der Ansprüche 9 bis 12, bei welcher die Mittel zum Zerlegen (30) Ausgleichselemente (32, 34) beinhalten.

14. Vorrichtung nach einem der Ansprüche 9 bis 13, bei welcher die Mittel zum Zerlegen (30) zwei sekundäre polarisierende Trennblätter (35, 36) beinhalten, welche jeweils im optischen Gang der beiden Komponenten des Superkontinuums (3) platziert sind und welche jeweils eine inverse Funktion gegenüber der Funktion des Polarisierers (34) aufweisen.

15. Vorrichtung nach einem der Ansprüche 8 bis 13, wobei die Vorrichtung zudem Mittel zur räumlichen Trennung (50) der Tetrahertz-Störung (6) in zwei Tetrahertz-Störungen beinhaltet, nämlich eine Analyse-Tetrahertz-Störung (6a) und eine Referenz-Tetrahertz-Störung (6b), sowie Mittel zur zeitlichen Verschiebung (52) einer der beiden Tetrahertz-Störungen der Gruppe, bestehend aus der Analyse-Tetrahertz-Störung (6a) und der Referenz-Tetrahertz-Störung (6b).

**Claims**

1. A method for one-shot measurement of the transient birefringence induced in an optical medium (12) by at least one terahertz perturbation (6), the method comprising a step of emission and spectral coding of a pulsed optical signal (2), **characterised in that** the coding step, which comprises the generation of a supercontinuum (3) in a state of determined polarisation, is combined with a step of decoding the polarisation ellipticity of the supercontinuum induced by the perturbation (6) of the medium (12), by decomposition of the electrical field of the supercontinuum in two polarisation directions and simultaneous measurement of the intensities $I_s$ and $I_p$ of the two components, the one-shot measurement consisting of encoding the temporal profile of the terahertz perturbation (6) by a phase change on the spectral profile of a single generated pulse of the supercontinuum (3), temporally stretched and propagated so that the pulse of the supercontinuum (3) and the terahertz perturbation (6) overlap each other temporally in the optical medium (12).

2. The method for one-shot measurement according to Claim 1, further comprising a step of balancing the intensities $I_S$ and $I_P$ of the two components of the electrical field of the supercontinuum (3).

3. The method for measurement according to Claim 1 or 2, in which the step of generating the supercontinuum (3) has a phase of propagating of at least one part of the pulsed optical signal (2) in a monofilament mode in order to be free of the spectral and temporal characteristics of the pulsed optical signal (2).

4. The method for measurement according to any one of Claims 1 to 3, comprising at least one step of optical compensation by correction of the chromatic and spatial aberrations of the device.

5. The method for measurement according to any one of Claims 1 to 4, in which the step of coding comprises a step of temporal shaping comprising a phase of stretching the supercontinuum (3) consisting of propagating the supercontinuum (3) along an identical geometric path for all the wavelengths of the supercontinuum (3).

6. The method for measurement according to Claim 4, comprising a step of shaping the spectral, spatial and temporal distribution of the supercontinuum (3).

7. The method for measurement according to any one of the preceding claims, the method comprising:

   i. a step of spatial separation of the terahertz perturbation (6) into two analysis (6a) and reference (6b) terahertz perturbations;
   ii. a step of temporal offsetting of the two analysis (6a) and reference (6b) terahertz perturbations; and
   iii. a step of encoding the two analysis (6a) and reference (6b) terahertz perturbations on a pulse of the supercontinuum (3).

8. A device for the one-shot measurement of the transient birefringence induced in an optical medium (12) by at least one terahertz perturbation (6), the device comprising a source (14) of emission of a pulsed optical signal (2) and means (4, 12) of spectral coding of the pulsed optical signal (2), **characterised in that** the means (4, 12) of spectral coding, which comprise means (4) of generating a supercontinuum (3) in a state of determined polarisation, are combined, by means (30) for decomposing the electrical field of the supercontinuum in two polarisation directions S and P, with a unit (40) for the simultaneous measurement of the intensities $I_S$ and $I_P$ of the two components, said means of spectral coding making it possible to encode the temporal profile of the terahertz perturbation (6) by a phase change of the spectral profile of a single generated pulse of the supercontinuum (3), temporally stretched and propagated so that the pulse of the supercontinuum (3) and the terahertz perturbation (6) overlap each other temporally in the optical medium (12).

9. The device according to Claim 8, in which the means (4) of generating the supercontinuum (3) comprise means (17, 18) of forming a monofilament in order to be free of the spatial and temporal characteristics of the pulsed optical source (14).

10. The device for measurement according to Claim 9, the device comprising means (17) of focussing the optical pulses (2) in order to concentrate part of the energy until it attains the propagation threshold according to a monofilament mode in a non-linear medium (18).

11. The device for measurement according to Claim 9, the device comprising means (17) of focussing the optical pulses (2) so as to inject part of these pulses into an optical fibre (18).

12. The device for measurement according to any one of Claims 9 to 11, the device comprising at least one means (17) of focussing and a diaphragm placed on the optical path of the pulse (2) in order to attenuate the effects of spatial fluctuations of the pulse (2) on the generation of the supercontinuum (3).

13. The device according to any one of Claims 9 to 12, in which the means (30) of decomposition comprise balancing elements (32, 34).

14. The device according to any one of Claims 9 to 13, in which the means (30) of decomposition comprise two secondary polarising splitting plates (35, 36) respectively disposed on the optical path of the two components of the supercontinuum (3) and each having a function opposite to that of the polariser (34).

15. The device according to any of Claims 8 to 13, the device further comprising means (50) of spatial separation of the terahertz perturbation (6) into two analysis (6a) and reference (6b) terahertz perturbations as well as means of temporal offsetting (52) of one of the two analysis (6a) and reference (6b) terahertz perturbations.

Figure 1

Figure 2

Figure 3A

Figure 3B

Figure 3C

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6573700 B, X.-C. Zhang, Z. Jiang

### Littérature non-brevet citée dans la description

- **L. DUVILLARET ; S. RIALLAND ; J.-L. COUTAZ.** *J. Opt. Soc. Am.,* 2000, vol. B 19, 2692
- **J. A. VALDMANIS ; G. MOUROU.** *IEEE J. Quantum Electron.,* 1986, vol. 22, 69
- **Z. JIANG ; X.-C. ZHANG.** *Appl. Phys. Lett.,* 1998, vol. 72, 1945
- **F. G. SUN ; Z. JIANG ; X.-C. ZHANG.** *Appl. Phys. Lett.,* 1998, vol. 73, 2233
- **J. R. FLETCHER.** *Opt. Exp.,* 2002, vol. 10, 1425
- **B. YELLAMPALLE ; K. Y. KIM ; G. RODRIGUEZ ; J. H. GLOWNIA ; A. J. TAYLOR.** *Appl. Phys. Lett.,* 2005, vol. 87, 211109
- **K. Y. KIM ; B. YELLAMPALLE ; G. RODRIGUEZ ; R. D. AVERITT ; A. J. TAYLOR ; J. H. GLOWNIA.** *Appl. Phys. Lett.,* 2006, vol. 88, 041123
- **J. SHAN ; A. S. WELING ; E. KNOESEL ; L. BARTELS ; M. BONN, A. NAHATA ; G. A. REIDER ; T. F. HEINZ.** *Opt. Lett.,* 2000, vol. 25, 426
- **S. P. JAMISON ; J. SHEN ; A. M. MACLEOD ; W. A. GILLESPIE ; D. A. JAROSZYNSKI.** *Opt. Lett.,* 2003, vol. 28, 1710
- **K. Y. KIM ; B. YELLAMPALLE ; A. J. TAYLOR ; G. RODRIGUEZ ; J. H. GLOWNIA.** *Opt. Lett.,* 2007, vol. 32, 1968
- **Z. JIANG ; F. G. SUN ; Q. CHEN.** *Appl. Phys. Lett.,* 1999, vol. 74, 1191
- **Y. LI.** *Appl. Phys. Lett.,* 2006, vol. 88, 251108
- **S. P. MICKANA ; K.-S. LEEB ; T.-M. LUB ; J. MUNCH ; D. ABBOTTA ; X.-C. ZHANG.** *Microelectronics Journal,* 2002, vol. 33, 1033
- **G.BERDEN ; A.F.G. VAN DER MEER ; S.P. JAMISON ; B. STEFFEN ; E.-A. KNABBE ; B. SCHMIDT ; P. SCHMÜSER ; A.M. MACLEOD ; P.J. PHILLIPS ; W.A. GILLESPIE.** *Proceedings of EPAC,* 2006